**Europäisches Patentamt**

**European Patent Office**

**Office européen des brevets**

(19)

(11) Veröffentlichungsnummer: **0 598 118 A1**

(12)
# EUROPÄISCHE PATENTANMELDUNG
## veröffentlicht nach Art. 158 Abs. 3 EPÜ

(21) Anmeldenummer: **92904486.5**

(51) Int. Cl.5: **C03B 11/00**

(22) Anmeldetag: **10.02.92**

(86) Internationale Anmeldenummer:
**PCT/RU92/00027**

(87) Internationale Veröffentlichungsnummer:
**WO 93/16007 (19.08.93 93/20)**

(43) Veröffentlichungstag der Anmeldung:
**25.05.94 Patentblatt 94/21**

(84) Benannte Vertragsstaaten:
**DE FR GB IT**

(71) Anmelder: **OBNINSKOE NAUCHNO-PROIZVODSTVENNOE PREDPRIYATIE "TEKHNOLOGIA"**
**ul. Kievskaya 15**
**Kaluzhskaya obl., Obninsk, 249020(RU)**

(72) Erfinder: **GORBAN, Igor Anatolievich**
**pr. Lenina, 164-138,**
**Kaluzhskaya obl.**
**Obninsk, 249020(RU)**
Erfinder: **SAMSONOV, Vyacheslav Ivanovich**
**ul. Gagarina, 51-89,**
**Kaluzhskaya obl.**
**Obninsk, 249020(RU)**

(74) Vertreter: **Finck, Dieter, Dr.-Ing.**
**Patentanwälte**
**v. Füner, Ebbinghaus, Finck,**
**Postfach 95 01 60**
**D-81517 München (DE)**

(54) **VERFAHREN ZUR HERSTELLUNG VON GLASERZEUGNISSEN UND EINRICHTUNG ZUR DURCHFUEHRUNG DES VERFAHRENS.**

(57) Das erfindungsgemässe Verfahren zur Herstellung von Glaserzeugnissen umfasst die Zuführung von Teilmengen geschmolzenen Glases und Formung derselben mittels einer Formausrüstung, die mindestens ein hohles Formgebungselement (1) enthält, dessen Innenfläche man mit einer Schicht (5) eines korrosions- und hitzefesten porösen Materials bedeckt; im Hohlraum (4) des Formgebungselementes (1) bringt man vor der Zuführung des geschmolzenen Glases ein zur intensiven Dampfbildung bei der Formungstemperatur fähiges Material in einer Menge unter, die die zur Ausfüllung des Hohlraumes (4) des Formgebungselementes (1) mit den gesättigten Dämpfen dieses Materials notwendige Menge etwas übersteigt, und durchtränkt mit ihm die Schicht (5) des korrosions- und hitzefesten Materials, man erwärmt das Formgebungselement (1) auf die Formgebungstemperatur, evakuiert seinen Hohlraum (4) bis $p_o = (0{,}02\text{-}0{,}1)$Pa und nimmt dann eine thermische Regelung des genannten Materials im Formgebungstemperaturintervall vor. Die zur Durchführung des Verfahrens erfindungsgemäss vorgeschlagene Einrichtung enthält eine Formausrüstung, die mindestens ein Formgebungselement (1) mit einem hermetisch dichten Hohlraum (4) einschliesst, in welchem ein zur intensiven Dampfbildung bei der Formungstemperatur fähiges Material in der vorstehend angegebenen Menge untergebracht ist, wobei auf der Innenfläche im Hohlraum (4) des Formgebungselementes (1) eine Schicht (5) eines korrisons- und hitzefesten Materials angeordnet ist, während der Hohlraum (4) selbst mit einer Vorrichtung zum Evakuieren desselben in Verbindung steht.

EP 0 598 118 A1

FIG.2

EP 0 598 118 A1

## Technisches Gebiet

Die vorliegende Erfindung bezieht sich auf Formausrüstungen, insbesondere auf ein Verfahren zur Herstellung von Glaserzeugnissen mittels Formausrüstungen, die Formgebungselemente wie Matrize, Pressstempel und Formenring einschliessen, welche bei der Formung von Erzeugnissen aus Teilmengen der Schmelzen oder Halbschmelzen beispielsweise von Glas eingesetzt werden, insbesondere betrifft sie ein Verfahren zu Herstellung von Glaserzeugnissen und eine Einrichtung zur Durchführung dieses Verfahrens.

## Zugrundeliegender Stand der Technik

Bei der Formung von Glaserzeugnissen aus Glasschmelzen oder-halbschmelzen hat der intensive Wärmeaustausch zwischen einer Teilmenge des zu formenden Materials und der Formausrüstung eine besondere Bedeutung. Glaserzeugnisse werden bei hohen Temperaturen, meist in einem Bereich von 400 bis 650°C, geformt, und hier entsteht eine Reihe von Problemen, von denen der Arbeitsrythmus, das heisst die Formungsgeschwindigkeit, die Sollbetriebszeit der Formausrüstung und die Qualität von Glaserzeugnissen abhängen, weshalb die Lösung der Aufgabe einer gleichmässigen und schnellen thermischen Regelung der Glasformausrüstung äusserst aktuell ist.

Das erste Problem ist mit der Notwendigkeit verbunden, die Temperatur der Formausrüstung in einem begrenzten Temperaturintervall zu halten, bei welchem die Formgebung optimal ist. Die Formung unterhalb des unteren Temperaturgrenzwertes ist dadurch gefährlich, dass eine plötzliche, sogar geringe Abnahme der Temperatur der Formausrüstung zum Verlust der Qualität der geformten Glaserzeugnisse führt, wobei auch optische und mechanische Eigenschaften derselben wegen der Entstehung solcher Fehler wie Hämmerung, Welligkeit, Risse und dergleichen verschlechtert werden.

Bei Überschreitung des oberen Grenzwertes der Formungstemperatur werden die Formgebungsflächen überhitzt, was ein Ankleben des Glases an den Formgebungsflächen zur Folge hat, wobei das Ankleben diffus und also katastrophal sein kann, da in diesem Fall eine Stillsetzung der gesamten Formfliesstrecke, eine Reinigung der Formausrüstung oder deren vollständige Auswechselung erforderlich sind.

Das zweite Problem hängt damit zusammen, dass das Halten der Formausrüstung in einem begrenzten Temperaturintervall durch unterschiedliche Intensität der Wärmeabführung von der Formausrüstung je nach den geometrischen Parametern des zu formenden Erzeugnisses und der Glasmarke erschwert wird. Die Geschwindigkeit der Wärmeabführung hängt von der Härtungsgeschwindigkeit des Glases, von der Dicke des Erzeugnisses und der Geometrie seiner einzelnen Abschnitte ab. Wenn das Glaserzeugnis sowohl breite flache als auch gekrümmte Abschnitte aufweist sowie auch spitzwinklige Abschnitte besitzt, was für verschiedenartige Lichtstreukörper bezeichnend ist, unterscheidet sich die Geschwindigkeit des Wärmeaustausches zwischen verschiedenen Abschnitten desselben bedeutend, was zur Entstehung verschiedener Fehler und zum Rissigwerden des Glases führt.

Von grosser Bedeutung bei der Formung ist die Tatsache, dass die Elemente der Formausrüstung eine unterschiedliche Dicke haben, weil sie massiv ausgeführt werden, und dementsprechend weisen sie unterschiedliche Wärmekapazität und unterschiedliche Wärmeaustauschintensität auf.

Die bekannten Verfahren der thermischen Regelung der Formausrüstung und die Konstruktion der Elemente der letzteren wurden gesondert nicht nur für verschiedene Glasmarken ("kurze" und "lange", d.h. schnell und langsam härtende), sondern auch für bestimmte Formungsgeschwindigkeiten sowie für einzelne Abschnitte der Ausrüstung entwickelt, d.h., die wärmetechnischen und mechanischen Aspekte der Formausrüstung und des Erzeugnisses sind untrennbar verbunden, was die Anwendung verschiedener Glasmarken auf dieser Ausrüstung, die Erhöhung der Arbeitegeschwindigkeiten der Formung und foglich die Leistungssteigerung der Ausrüstung wesentlich einschränkt.

Es sind ein Verfahren und eine Einrichtung zur Formung von Glaserzeugnissen bekannt (US, A, 4790867), die ein vervollkommnetes Kühlsystem zur Wärmeabführung mit verschiedenen Geschwindigkeiten in Abhängigkeit von den Arbeitsgeschwindigkeiten der Formung aufweisen.

Dieses Verfahren und die Einrichtung erlauben es, ein Kühlsystem für Formgebungselemente zu schaffen, das auf einen weiten Bereich der Arbeitsgeschwindigkeiten beim Einsatz ein und derselben Formausrüstung abgestimmt ist.

Das genannte Verfahren und die genannte Einrichtung gewährleisten jedoch keine effektive Wärmeabführung von den Formgebungsflächen, die mit der Glasmasse in Berührung stehen. Dies ist durch eine hohe Wärmeträgheit des Kühlsystems bedingt. In diesem Fall kann man das Formgebungselement (beispielsweise den Pressstempel) als eine Konstruktion betrachten, die aus drei Metallschichten besteht, die unmittelbar miteinander in Berührung stehen und unterschiedliche Wärmaleitfähigkeit aufweisen, und zwar: der Pressstempelkörper, das Material mit niedriger Schmelztemperatur (Lot) und das Thermoregelelement (Kühlblock). Es versteht sich, dass die Wärmeübertragung von den Oberflächen, die mit der Glasmasse in Berührung stehen, zu einem Kältemittel, das in die Kanäle des Thermoregelelementes gelangt, nur aufgrund der Wärmeleitfähigkeit zustandekommen kann. Bekanntlich hängt dieser Prozess der Wärmeübertragung von einer ganzen Reihe von Faktoren (der Wärmeleitfähigkeit des Materials, der Schiechtdicke u.dgl.) ab und hat eine hohe Trägheit.

In diesem Zusammenhang hat das genannte Kühlsystem keine Möglichkeit, operativ zu reagieren (Wärme abzuführen) bei jähen Temperaturänderungen an den Formgebungsflächen, die während jedes Zyklus der Formung von Glaserzeugnissen stattfinden. So kann es bei einer Erhöhung der Formungsgeschwindigkeit infolge der Trägheit des Kühlsystems zu einer Überhitzung der Formgebungsflächen, die mit der Glasmasse in Berührung stehen, und als Folge davon zu einem Ankleben des Glases an denselben kommen.

Teilweise wird dieses Problem dadurch gelöst, dass man in dem genannten Verfahren und der genannten Einrichtung das Thermoregelelement aus verschiedenen Metallen mit unterschiedlicher Wanddicke ausführt und sie während einer Änderung der Formungsvernältnisse eins durch das andere ersetzt. So benutzt man bei höheren Arbeitsgeschwindigkeiten ein dünneres Thermoregelelement, das aus einem Metall mit mässiger Wärmeleitfähigkeit, beispielsweise aus nichtrostendem Stahl, besteht, während man im Falle von niedrigen Arbeitsgeschwindigkeiten das Element aus einem stark wärmeleitenden Material, beispielsweise Aluminium, dickwandig ausführt.

Dies aber löst nicht das Problem der Trägheit des Kühlsystems insgesamt, sondern nur teilwise, da der eigentliche Prozess der Wärmeabführung von den Formgebungsflächen zum Kältemittel der frühere bleibt (Wärmeleitung durch eine mehrschichtige Wandung) und sich nur unbedeutend quantitativ verändert.

Somit lassen sich dieses Verfahren und die Einrichtung wegen einer unzureichend hohen Effektivität des Kühlsystems nur für einen begrenzten Temperaturbereich der Formung anwenden.

Zugleich machen die Herstellung und Auswechselung der Elemente der thermischen Regelung während des Formungsprozesses diesen Prozess weniger dynamisch und bereiten Unbequemlichkeiten beim Betrieb.

Bekannt ist auch ein Verfahren zur Herstellung von Glaserzeugnissen (US, A, 3285728) durch Zuführung von Teilmengen geschmolzenen Glases und Formung derselben durch eine Formausrüstung, die mindestens ein hohles Formgebungselement enthält, in dessen Hohlraum man ein zu intensiven Dampfbildung bei Formungstemperaturen fähiges Material unterbringt, als welches Quecksibler zur Verwendung kommt, das Formgebungselement auf die Formungstemperatur erwärmt und dann eine thermische Regelung des genannten Materials im Formungstemperaturintervall vornimmt. Das genannte Verfahren führt man mittels einer Einrichtung durch, die eine Formausrüstung, bei welcher zumindest ein Formgebungselement einen hermetisch dichten Hohlraum besitzt, in dem ein zur intensiven Dampfbildung bei der Formungstemperatur fähiges Material untergebracht ist, enthält und ein Element zu thermischen Regelung dieses Materials im Formungstemperaturintervall aufweist.

Dieses Verfahren und die Einrichtung gestatten es, die Temperatur der Formgebungsflächen des Formgebungselementes bei der Formung einer Teilmenge geschmolzenen Materials während einer Änderung der Arbeitsgeschwindigkeiten der Formung zu regeln.

Dieses Verfahren und die Einrichtung gewährleisten jedoch keine effektive Wärmeabführung von den Formgebungsflächen des Formgebungselementes infolge einer hohen Trägheit des Kühlsystems. Die Trägheit dieses Systems ist dadurch bedingt, dass der Hohlraum des Formgebungselementes (beispielsweise des Pressstempels) mit Quecksilber vollgefüllt ist, nämlich bis zu einem Höhenstand, der die Oberkanten des zu formenden Erzeugnisses beim Eintritt des Pressstempels in die Matrize übersteigt. In diesem Falle kann man den Pressstempel als eine massive Ganzmetallkonstruktion mit einer aus flüssigem Quecksilber bestehenden inneren Einlage betrachten, dementsprechend wird auch die Wärmeabführung von den Formgebunsflächen im wesentlichen durch die Wärmeleitfähigkeit des Presstempelmaterials und des Quecksilbers bestimmt werden. Da aber die Geschwindigkeit der Wärmeausbreitung in Metallen durch die Wärmeleitfähigkeit unzureichend hoch ist, so wird dieses Kühlsystem demnach nicht gestatten, auf schroffe Temperaturänderungen der Formgebungsflächen der Formausrüstungselemente, die bei der Formung von Glaserzeugnissen stattfinden, schnell zu reagieren.

Überdies gewährleisten das genannte Verfahren und die genannte Einrichtung keine gleichmässige Temperaturverteilung auf den Formgebungsflächen unabhängig von der Temperatur und Dicke von Glaserzeugnissen.

Während der Formung ist das Temperaturprofil an den mit der Glasmasse in Berührung stehenden Formgebunsflächen ungleichmässig. In der Regel kommt das Gebiet hoher Temperaturen auf die Mitte des Formgebunselementes, zugleich sind seine oberen Teile kälter. Das zieht die Bildung lokaler Spannungen an der Oberkante des Erzeugnisses nach sich, die oft zu Mikrorissen relaxieren. Die ungleichmässige Temperaturverteilung auf den Formgebungsflächen wird auch von der Geometrie und Dicke von Erzeugnissen beeinflusst. Es verhält sich so, das wenn ein Erzeugnis spitzwinklige und dickwandige Teile sowie flache und breite Teile aufweist, so unterscheiden sich die Wärmeaustauschgeschwindigkeit und demnach auch die Temperatur an den Formgebungsflächen in diesen Abschnitten bedeutend voneinander. Einer der wichtigsten Faktoren, die die Qualität und das Sortiment von zu formenden Erzeugnissen bestimmen, ist daher die Isothermie der mit der Glasmasse in Berührung stehenden Formgebungsflächen.

Zum Temperaturausgleich an den mit der Glasmasse in Berührung stehenden Formgebunsflächen ist die Organisation einer schnellen Wärmentnahme und -umverteilung auf der gesamten Formgebungsfläche unerlässliche Bedingung.

Bei diesem Kühlsystem erfolgt wegen seiner hohen Trägheit die Wärmeentnahme von den Formgebungsflächen langsam, und die Umverteilung der Wärme von den stärker erwärmten Teilen zu den weniger erwärmten bleibt praktisch aus.

In diesem Zusammenhang ist die Formung von Erzeugnissen aus Glas mit komplizierter Geometrie und veränderlicher Dicke nach dem genannten Verfahren und mit der genannten Vorrichtung problematisch.

Ausserdem wird bei Formungstemperaturen von z.B. 600 $^\circ$C der Druck gesättigter Quecksilberdämpfe im hermetisch dichten Hohlraum des Pressstempels $0,87.10^4$ Pa.s betragen, was bei der geringen Dicke seiner Wände eine offensichtliche Gefahr beim Betrieb des Pressstempels infolge dessen möglicher Zerstörung darstellt.

Darüber hinaus ist die Anwendung von Quecksilber, das ein hochtoxisches Material darstellt, vom ökologischen Standpunkt aus unzweckmässig. Das Quecksilber ist chemisch ausserordentlich aggresiv gegen das Material des Pressstempels, was dessen Sollbetriebzeit herabsetzt.

Offenbarung der Erfindung

Der Erfindung liegt die Aufgabe zugrunde, ein Verfahren mit einer solchen thermischen Regelung von Formgebungselementen und eine Einrichtung mit einem solchen System der thermischen Regelung zu schaffen, welche es gestatten würden, die Effektivität der Wärmeabführung von den mit der Glasmasse in Berührung stehenden Oberflächen der Formgebungselemente zu steigern und eine gleichmässige Temperaturverteilung auf diesen Oberflächen unabhängig von der Formungsgeschwindigkeit, der Geometrie und Dicke von zu formenden Glaserzeugnissen zu erzielen.

Diese Aufgabe ist durch Schaffung eines Verfahrens zur Herstellung von Glaserzeugnissen gelöst, das die Zuführung von Teilmengen geschmolzenen Glases und Formung derselben mittels einer Formausrüstung umfasst, die mindestens ein hohles Formgebungselement enthält, in dessen Hohlraum man vor der Zuführung des geschmolzenen Glases ein zur intensiven Dampfbildung bei der Formungstemperatur fähiges Material unterbringt, das Formgebungselement auf die Formungstemperatur erwärmt und dann eine thermische Regelung des genannten Materials im Formungstemperaturintervall vornimmt, wobei man erfindungsgemäss die Innenfläche des hohlen Formgebungselementes mit einer Schicht eines korrosions- und hitzefesten porösen Materials bedeckt und nach Erwärmung des Formgebungselementes seinen Hohlraum bis $P_o$ - (0,02 - 0,1) Pa evakuiert, während man das zur intensiven Dampfbildung bei der Formungstemperatur fähige Material in einer Menge zuführt, die die zur Ausfüllung des Hohlraums des Formgebungselementes mit den gesättigten Dämpfen dieses Materials und Durchtränkung der Schicht des korrosions- und hitzefesten Materials mit demselben notwendige Menge etwas übersteigt.

Bei dem erfindungsgemässen Verfahren dient als Hauptmechanismus der Wärmeübertragung auf die Formgebungsflächen ein Mechanismus der Wärmeübertragung durch gesättigte Dämpfe von den am stärksten wärmebelasteten Abschnitten der Formgebungsflächen zu den weniger wärmebelasteten Abschnitten aufgrund einer Änderung des Aggregatzustandes des Materials, das innerhalb des Hohlraumes untergebracht und zur intensiven Dampfbildung bei der Formungstemperatur fähig ist.

Der sich in den am stärksten wärmebelasteten Abschnitten der Formgebunsflächen bildende gesättigte Dampf entnimmt ihnen eine gewisse Wärmemenge, die der Menge des gebildeten Dampfes und der Grösse der latenten Verdampfungswärme proportional ist, wird durch den Dampf zu den weniger wärmebelasteten Oberflächenabschnitten übertragen und gibt, indem er auf diesen kondensiert, die Wärme an diese Abschnitte ab. Hohe Werte der latenten Verdampfungswärme von zur intensiven Dampfbildung fähigen Materialien führen zu einem beträchtlichen Wärmetransport längs der Formgebunsflächen selbst in den Fällen, wo die Temperaturdifferenz zwischen verschiedenen Abschnitten der Formgebungsflächen gering ist.

Zur Realisierung der Bedingungen des erfindungsgemässen Verfahrens muss auf der Innenfläche des hohlen Formgebungselementes ein dünnen. Film der zur intensiven Dampfbildung bei der Formungstemperatur fähigen Materials vorhanden sein. Überdies muss man eine Zirkulation dieses Materials von den Abschnitten der Kondensation gesättigter Dämpfe zu den Abschnitten zustandebringen, wo ihre intensive Verdampfung vonstatten geht.

Zu diesem Zweck bedeckt man die Innenfläche des Formgebungselementes mit einer Schicht eines korrosions- und hitzefesten porösen Materials.

Das poröse Material saugt nach dessen Erwärmung das in den Hohlraum zugeführte, zur intensiven Dampfbildung fähige Material auf und erzeugt einen Kapillardruck, der die Flüssigkeit von den Abschnitten, wo sie kondensiert, zu den Abschnitten bewegt, wo sie verdampft. Auf diese Weise geht eine Umverteilung der Flüssigkeit auf den Formgebungsflächen vor sich und wird eine konstante Dicke des Wärmeträgerfilmes auf der Formgebungsfläche aufrechterhalten.

Die Evakuierung des hermetisch dichten Hohlraumes bis $P_o$ = (0,02 - 0,1)Pa ist erforderlich, damit man während der Pressformung von Glaserzeugnissen im Hohlraum reine Dämpfe des zugeführten Materials hat. Dadurch ist es möglich, einen vorgegebenen Sollwert des Drucks der gesättigten Dämpfe des flüssigen Wärmeträgers im hermetisch dichten Hohlraum in Abhängigkeit von der Höhe des Vakuums und der Temperatur zu erzeugen, d.h. während dar Pressformung im Hohlraum Dämpfe des flüssigen Metalls zu haben, die sich in jedem Zeitmoment im gesättigten Zustand befinden.

Das zur intensiven Dampfbildung bei der Formungstemperatur fähige Material führt man dem Hohlraum in einer Menge zu, die die zur Ausfüllung des Hohlraumes des Formgebungselementes mit den gesättigten Dämpfen dieses Materials und Durchtränkung der Schicht des korrosions- und hitzefesten Materials mit demselben notwendige Menge etwas übersteigt. Die genannte Menge des zur intensiven Damfbildung bei der Formungstemperatur fähigen Materials ist dadurch bedingt, dass auf den Innenflächen des Formgebungselementes stets ein Film flüssigen Metalls anwesend sein soll, der während der Pressformung nicht austrocknen soll. Bei einem Mangel an Wärmeträger auf der Formgebungsfläche kann eine kritische Situation, die sogenannte Wärmeaustauschkrise, eintreten, wenn an der Stelle einer intensiven Wärmezufuhr der Wärmeträgerfilm fehlt, was eine lokale Überhitzung der Oberfläche zur Folge hat. Und bei einer überschüssigen Ausfüllung des Hohlraumes mit dem Wärmeträger nimmt die Trägheit des Formgebungselementes während der Pressformung zu.

Die beschriebenen Massnahmen und die sie begleitenden physikalischen Vorgänge gewährleisten eine intensive, praktisch trägheitslose Zirkulation des Wärmeträgers im Kreis aufeinanderfolgender Umwandlungen "Flüssigkeit - - Dampf - Flüssigkeit" und ermöglichen dadurch die Übertragung einer beträchtlichen Wärmemenge von den am stärktsten wärmebelasteten Abschnitten zu den weniger wärmebelasteten. Die genannte Intensivierung der Wärmeentnahme von den "heissen" Abschnitten erlaubt es wiederum, die Formung von Glaserzeugnissen mit hoher Geschwindigkeit unabhängig von der Geometrie und Dicke von zu formenden Glaserzeugnissen unter Aufrechterhaltung ihrer hohen Qualität durchzuführen. Zur Ergänzung sei bemerkt, dass insofern der Dampf von den "heissen" Abschnitten zu den "kalten" unabhängig von der Konfiguration des inneren Hohlraumes des Formgebungselementes ungehindert dringt, so erlaubt das, das erfindungsgemässe Verfahren zur Formung von Erzeugnissen aus einem Glas mit komplizierter Geometrie anzuwenden und damit das Sortiment von zu formenden Erzeugnissen zu erweitern.

Es ist zweckmässig, dass man das zur intensiven Dampfbildung bei der Formungstemperatur fähige Material dem Innenraum des Formgebungselements im einer Menge zuführt, die die zur vollständigen Ausfüllung des Hohlraums des Formgebungselementes mit den gesättigten Dämpfen dieses Materials und Durchtränkung der Schicht des korrosions- und hitzefesten porösen Materials mit demselben notwendige Menge um 3 bis 7% übersteigt.

Beim Auftragen einer Schicht des korrosion- und hitzefesten Materials auf die Innenfläche des hohlen Formgebungselementes kann ein geringer Spalt zwischen der Innenfläche des hohlen Formgebungselementes und der genannten Schicht entstehen. Zur Gewährleistung eines vollständigen Wärmekontaktes zwischen der porösen Schicht und der Wandung des Formgebungselementes ist es erforderlich, den Spalt mit dem dem Hohlraum des Formgebungselementes zugeführten flüssigen Material auszufüllen. Die genannte Menge des zugeführten Materials, das zur intensiven Dampfbildung bei der Formungstemperatur fähig ist, garantiert eine vollständige Durchtränkung der Schicht des korrosions- und hitzefesten Materials mit demselben und seine ständige Anwesenheit im Spalt zwischen der genannten Schicht und der Innenwand des Formgebungselementes.

Es ist wünschenswert, dass die Menge des zur intensiven Dampfbildung bei der Formungstemperatur fähigen Materials zu dessen Dichte, dem Flächeninhalt der Innenfläche des Hohlraumes und der Dicke der Schicht des korrosions- und hitzefesten Materials direkt proportional ist. Die optimale Menge des Wärmeträgers ( m)im hermetisch dichten evakuierten Hohlraum, welche die Durchtränkung der Schicht des korrosions- und hitzefesten Materials gewährleistet, wird durch die Beziehung bestimmt:

$$m = (1{,}03 - 1.07 \rho \delta S \qquad (1)$$

worin bedeuten:

$\rho$ - Dichte des Wärmeträgermaterials,

$\delta$ - Dicke der Schicht des korrosions- und hitzefesten porösen Materials,

S - Flächeninhalt der Innenfläche des hohlen Formgebungselementes.

Diese Menge des Wärmeträgers im Hohlraum reicht aus, um eine kontinuierliche Wärmeübertragung auf die Formgebungsflächen während der Pressformung durch aufeinanderfolgenden Übergang des flüssigen Wärmeträgers in den gesättigten Dampf und dessen Rückumwandlung in die Flüssigkeit mittels Kondensation zustandezubringen.

Es ist wünschenswert, dass man als Material, das zur intensiven Dampfbildung bei der Formungstemperatur fähig ist, Metalle aus der Gruppe von Alkalimetallen verwendet, die einzeln oder in Kombination genommen sind.

Solche Materialien wie Zäsium, Kalium, Natrium, Lithium sowie eine eutektische Kalium-Natrium-Legierung besitzen einen Komplex von physikalischen Eigenschaften im Temperaturbereich der Formung von Glaserzeugnissen (400 - 650°C), der eine effektive Wärmeübertragung im hermetisch dichten evakuierten Hohlraum des Formgebungselements gewährleistet. Zu solchen Eigenschaften gehören die Benetzbarkeit der korrosions- und hitzefesten porösen Schicht und des Materials der Wandung des Formgebungselementes mit dem Wärmeträger, eine grosse latente Verdampfungswärme, eine hohe Wärmeleitfähigkeit des Wärmeträgers, ein niedriger Wert seiner Viskosität in flüssigem und dampfförmigem Zustand, hohe Werte der Oberflächenspannung, eine hohe Temperaturwechselbeständigkeit dieser Materialien.

Es ist wünschenswert, dass als Alkalimetall Natrium verwendet wird.

Der Komplex der aufgezählten Eigenschaften, die die Effektivität des Wärmeträgers kennzeichnen, lässt sich in ein gewisses Qualitätskriterium (N) vereinen:

$$N = \rho \, \sigma \, r/\mu \qquad (2)$$

$\rho$ - Dichte,

$\sigma$ - Oberflächenspannung,

r - latente Verdampfungswärme,

$\mu$ - Wärmeträgerviskosität.

Die Änderung des Qualitätskriteriums N für die aufgezählten Materialien im Formungstemperaturbereich (400 - 650°C) zeigt, dass Natrium als Arbeitsmaterial am besten geeignet ist. Wenn man noch in Betracht zieht, dass das Natrium einen niedrigen Preis hat, so leuchtet es ein, dass als Arbeitsmaterial für die Formgebunselemente Natrium werden soll.

Es ist zweckmässig, im Hohlraum des Formgebungselementes einen Druck gesättigter Natriumdämpfe von 0,08 bis 12 kPa zu erzeugen.

Der angegebene Druck gesättigter Natriumdämpfe ist optimal für die Gewährleistung der erforderlichen Temperatur der Formgebungsfläche des hohlen Formgebungselementes und für die Umverteilung dieser Temperatur auf der Oberfläche des Formgebungselementtes von den "heisseren" zu den "kälteren" Abschnitten unabhängig von der Formungsgeschwindigkeit sowie von der Geometrie und Dicke von zu formenden Erzeugnissen.

Es ist günstig, als korrosions- und hitzefestes poröses Material ein Material einzusetzen, das eine chemische Wechselwirkung mit Natrium ausschliesst und das zweckmässigerweise in Form eines Metallnetzes auszubilden ist.

Die Verwendung des besagten Materials schliesst die Bildung von Ablagerungen auf der porösen Struktur und die Verstopfung ihrer Poren aus, was wiederum zu einer gleichmässigen Durchtränkung der gesamten porösen Struktur mit flüssigem Natrium und zur ungehinderten Zirkulation desselben in der genannten Schicht beiträgt. Die Ausbildung dieser Schicht in Form eines Metallnetzes gestattet es, einen Kapillardruck zur Gewähreistung der genannten Zirkulation zu erzeugen.

Somit bietet das erfindungsgemässe Verfahren zur Formung von Glaserzeugnissen die Möglichkeit:

- eine isotherme Tempeaturverteilung auf den Formgebungsflächen sicherzustellen;
- die Effektivität der Wärmeentnahme von den Formgebungsflächen zu erhöhen (die Dichten der übertragenen Wärmeflüsse können in diesem Falle etwa einige hundert W/cm² betragen);
- die Leistung des Prozesses der Pressformung um 30 bis 40% zu steigern;
- die Wanddicke des zu formenden Erzeugnisses um 20 bis 30% zu vermindern;
- Erzeugnisse verschiedener Dicke unabhängig von ihrer Geometrie zu formen;

- die Qualität zu erhöhen und den Ausschuss der hergestellten Erzeugnisse dank der Gewährleistung voll - ständiger plastischer Verformungen des Glases auf den Formgebungsflächen zu reduzieren.

Die gestellte Aufgabe ist auch durch Schaffung einer Einrichtung zur Herstellung von Glaserzeugnissen gelöst, enthaltend eine Formausrüstung, die mindestens ein Formgebungselement mit einem hermetisch dichten Hohlraum einschliesst, in welchem ein zur intensiven Dampfbildung bei der Formungstemperatur fähiges Material untergebracht ist, wobei die Einrichtung eine Vorrichtung zur thermischen Regelung des genannten Materials im Formungstemperaturintervall besitzt und wobei erfindungsgemäss die Einrichtung mit einer Vorrichtung zum Evakuieren des Hohlraumes des Formgebungselementes versehen ist, auf dessen Innenfläche eine Schicht eines korrosions- und hitzefesten porösen Materials angeordnet ist, während in der Wandung dieses Formgebungselementes ein Stutzen für die Zuführung des zur intensiven Dampfbildung bei der Formungstemperatur fähigen Materials angebracht ist, welcher mit der Vorrichtung zum Evakuieren des Hohlraumes des Formgebungselementes in Verbindung steht, wobei das zur intensiven Dampfbildung bei der Formungstemperatur fähige Material im Hohlraum des Formgebungselementes in einer Menge untergebrecht ist, die die zur Ausfüllung des Hohlraumes des Formgebungselementes mit den gesättigten Dämpfen dieses Materials und Durchtränkung der Schicht des korrosions- und hitzefesten porösen Materials mit demselben notwendige Menge etwas übersteigt.

Die Anordnung der Schicht des korrosions- und hitzefesten porösen Materials auf der Innenfläche des Hohlraumes des Formgebungselementes erlabut es, bei der Formungstemperatur einen ständigen flüssigen Film des zur intensiven Dampfbildung bei der Formungstemperatur fähigen Materials zu erzeugen, das die Innenfläche des Formgebungselementes benetzt und in den Poren der Schicht zirkuliert. Das bedeutet, dass das korrosions- und hitzefeste poröse Material die Funktion eines eigenartigen "Dochtes" erfüllt, in dem das zur intensiven Dampfbildung bei der Formungstemperatur fähige Material mit hoher Geschwindigkeit zirkuliert. Dadurch gewährleistet diese Schicht eine schnelle Wärmeübertragung von den stärker erwärmten Oberflächenteilen des Formgebungselementes zu den weniger erwärmten und stellt folglich sicher, dass auf den Formgebungsflächen Bedingungen geschaffen werden, welche den isothermen nahekommen.

Der in der Wandung des Formgebungselementes angebrachte Stutzen erfüllt zwei Funktionen. Erstens führt man über diesen das zur intensiven Dampfbildung fähige Material dem Hohlraum des Formgebungselementes zu. Zweitens wird über ihn das Evakuieren des Hohlraumes des Formgebungselementes vorgenommen. Im Zusammenhang damit ist er mit der Evakuierungsvorrichtung verbunden, als welche eine beliebige bekannte, für ähnliche Zwecke bestimmte Vorrichtung verwendet werden kann.

Es ist günstig, im Hohlraum des Formgebungselementes als Material, das zur intensiven Dampfbildung bei der Formungstemperatur fähig ist, ein Metall aus der Gruppe von Alkalimetallen unterzubringen, als welches zweckmässigerweise Natrium zu wählen ist.

Wie vorstehend beschrieben, besitzen solche Materialien wie Zäsium, Kalium, Natrium, Lithium sowie eine eutektische Kalium-Natrium-Legierung einen Komplex von physikalischen Eigenschaften im Temperaturbereich der Formung von Glaserzeugnissen (400 - 650°C), der eine effektive Wärmeübertragung im hermetisch dichten evakuierten Hohlraum des Formgebungselementes gewährleistet. Dabei ist Natrium das billigste Material.

Es ist wündschenswert, auf der Innenfläche des Formgebungselementes als Schicht des korrosions- und hitzefesten Materials eine Schicht eines Materials anzuordnen, das eine chemische Wechselwirkung mit Natrium ausschliesst und ein Metallnetz darstellen kann, das an der Innenfläche des Formgebungselementes starr befestigt ist.

Die Verwendung des genannten Materials schliesst die Bildung von Ablagerungen auf der porösen Struktur und die Verstopfung ihrer Poren aus, was wiederum zu einer gleichmässigen Durchtränkung der gesamten porösen Struktur mit flüssigem Natrium, zum Eindringen des flüssigen Natriums in den möglichen Spalt zwischen der Innenfläche der Wandung des Formgebungselementes und der Schicht des korrosions- und hitzefesten porösen Materials und zur ungehinderten Zirkulation des flüssigen Natriums in der genannten Schicht beiträgt.

Die Ausbildung der genannten Schicht in Form eines Metallnetzes erlaubt es, einen Kapollardruck zu erzeugen, der die Zirkulation des flüssigen Metalls auf der gesamten Innenfläche im Hohlraum des Formgebungselementes gewährleistet.

Somit bietet die Anwendung der vorliegenden Erfindung die Möglichkeit, die Effektivität der Wärmeabführung von den mit der Glasmasse in Berührung stehenden Oberflächen der Formgebungselemente zu steigern und eine gleichmässige Temperaturverteilung auf diesen Oberflächen unabhängig von der Formungsgeschwindigkeit, der Geometrie und der Dicke von zu formenden Glaserzeugnissen zu erzielen.

Das erfindungsgemässe Verfahren zur Pressformung von Glaserzeugnissen führt man durch Zuführung von Teilmengen der Glasmasse und Formung derselben mittels einer Formausrüstung durch, die minde-

8

EP 0 598 118 A1

stens ein hohles Formgebungselement enthält, als welches eine Matrize, ein Pressstempel oder ein Pressring fungieren kann.

Zur Darlegung des Wesens der Erfindung wird hier ein Beispiel behandelt, in welchem ein Pressstempel hohl ausgebildet ist.

Nach dem erfindungsgemässen Verfahren trägt man auf die Innenfläche des Hohlraumes des Pressstempels äquidistant zur Oberfläche des Hohlraumes eine Schicht eines kapillarporösen hitzefesten Materials auf. Die kapillarporöse Struktur stellt ein feinporiges Netz der Sergebindung aus einem Feindraht dar, der aus nichtrostendem Stahl besteht, der eine chemische Wechselwirkung mit einem zur intensiven Dampfbildung bei der Formungstemperatur fähigen Material ausschliesst, beispielsweise aus einem rostfreien Draht mit der Dicke der Kettendrähte 0,09 nm und der Schussdrähte 0,055 nm. Man verleiht dem Netz eine Form, welche die Linienführung des Hohlraumes wiederholt, und schweisst es an die Innenwand des Pressstempels durch elektrisches Widerstandsschweissen, beispielsweise durch ArgonElektrolichtbogen-Punktschweissen,an.

Hiernach erwärmt man die Formausrüstung, die eine Matrize, einen Pressring und einen Pressstempel einschliesst, nach einem der bekannten Verfahren, beispielsweise mittels eines Gasbrenners, auf die untere Grenze des Temperaturintervalls der Formung eines konkreten Glases. Bekanntlich beträgt diese Grenze 400 bis 450°C, z.B für Alumoborosilikatgläser - 450°C.

Die folgende Etappe besteht im Evakuieren des Hohlraumes des Pressstempels bis $P_o$ = (0,02- 0,1) Pa, was es gestattet, im weiteren während der Pressformung von Glaserzeugnissen einen vorgegebenen Sollwert des Drucks der gesättigten Dämpfe des zur intensiven Dampfbildung bei der Formungstemperatur fähigen Materials (des Wärmeträgers) im hermetisch dichten Hohlraum des Pressstempels in Abhängigkeit von der Höhe des Vakuums und der Temperatur zu erzeugen, das heisst im weiteren mit den Dämpfen des flüssigen Wärmeträgers zu tun zu haben, die sich in gesättigtem Zustand befinden und einer Gleichung für den Zustand eines idealen Gases untergeordnet sind:

$$pV = \frac{m}{\mu} R T \qquad (3),$$

worin bedeuten:

p - Druck der gesättigten Dämpfe des Wärmeträgers,

V - Volumen des Pressstempel-Hohlraumes,

m - Masse der gesättigten Dämpfe des Wärmeträgers im Hohlraum,

R - universelle Gaskonstante,

T - Temperatur in Kelvin-Grad,

$\mu$ - relative Molekülmasse des Wärmeträgers.

Zugleich werden beim Evakuieren aus dem Hohlraum des Pressstempels in der Luft enthaltene Gase entfernt, die die Arbeit des Presstempels wesentlich beeinflussen können, indem sie einen Teil der Arbeitsfläche der Vorrichtung zur thermischen Regelung des zur intensiven Dampfbildung bei der Formungstemperatur fähigen Materials (des Kondensators) blockieren. Daneben ist die Entfernung des Luftsauerstoffs aus dem Hohlraum des Pressstempels notwendig, um die Bildung von Oxiden auszuschliessen oder wenigstens zu vermindern, welche sich in den Bereichen der intensiven Verdampfung des Wärmeträgers ansammeln und Kapillaröffnungen der kapillarporösen Struktur verstopfen können.

Angestellte Experimente zeigen, dass die Erfüllung der genannten Forderungen beim Evakuieren des Hohlraumes des Pressstempels im Bereich der Drücke $p_o$ = (0,02 - 0,1) Pa erzielt wird. Dabei ist die experimentell festgelegte obere Grenze $p_o$ = 0,1 Pa ausgehend von den Bedingungen einer zulässigen Ansammlung von Oxiden auf der porösen Struktur während der Arbeit des Pressstempels gewählt, die sich auf die kapillaren Eigenschaften des porösen Materials in der Zone der intensiven Verdampfung des Wärmeträgers (der Pol des Pressstempels) nicht merklich auswirkt.

Die untere Grenze $p_o$ = 0,02 Pa kann im Prinzip gleich Null sein. Aber die Erreichung eines Hochvakuums erfordert eine teure Ausrüstung und einen beträchtlichen Zeitaufwand. Der Einsatz von Labor-Vakuumeinrichtungen gestattet es, ohne merkliche Aufwendungen $p_o$ = (0,02--0,1) Pa zu erreichen. Die weitere Absenkung dieses Drucks hat sich auf die Arbeits des Pressstempels während der Pressformung praktisch nicht ausgewirkt.

Der Hohlraum des Pressstempels ist also zweckmässig auf $p_o$ - (0,02 - 0,1) Pa zu evakuieren.

Nach Erreichung des erforderlichen Vakuums im Hohlraum des Pressstempels führt man das zur intensiven Dampfbildung bei der Formungstemperatur fähige Material, erwärmt auf die untere Formungstemperatur, in einer Menge m zu, wo

$$m = (1,03 - 1,07) \, \rho \, S \, \delta , \qquad (1)$$

d.h. in einer Menge, die die zur Ausfüllung des Hohlraumes des Formgebungselementes mit den gesättigten Dämpfen dieses Materials und Durchtränkung der Schicht des korrosions- und hitzefesten Materials mit demselben notwendige Menge etwas übersteigt.

Aus der Beziehung (1) ist ersichtlich, dass diese Menge zur Dichte des genannten Materials, dem Flächeninhalt der Innenfläche des Pressstempel-Hohlraumes und der Schichtdicke des Korrosions- und hitzefesten Materials proportional ist. Dabei übersteigt die Menge des zugeführten Materials um 3 bis 7% die zur vollständigen Ausfüllung des Pressstempel-Hohlraumes mit den gesättigten Dämpfen dieses Materials und Durchtränkung der Schicht des korrosions- und hitzefesten porösen Materials mit demselben notwendige Menge. Dabei füllt das genannte Material in flüssigem Zustand die poröse Struktur des Netzes auf der gesamten Innenfläche des Pressstempels aus.

Der untere Grenzwert in bezug auf die Wärmeträgermasse ist durch die Erscheinung der Sublimation des Wärmeträgers von dem Gebiet der intensiven Wärmezuführung (der Pol des Pressstempels) im unteren Teil des Pressstempels zum Gebiet der Kondensation des Wärmeträgers im oberen Teil des Pressstempels bedingt. Hier kondensieren die Dämpfe des flüssigen Materials in Form von Tropfen, und auf diese Weise geht die Umverteilung des Wärmeträgers im Hohlraum des Pressstempels vor sich.

Angestellte Experimente haben gezeigt, dass durch die Zuführung des Wärmeträgers in einer Menge, die um 3% die zur Durchtränkung des Netzes notwendige Menge übersteigt, ein Mangel des Wärmeträgers auf dem Netz vermieden werden kann. Der obere Grenzwert der überschüssigen Menge des Wärmeträgers in Höhe von 7% ist durch eine Erscheinung bedingt, die mit der Austrocknung des Filmes des flüssigen Wärmeträgers an der Stelle der intensiven Wärmeabführung zusammenhängt. Die Austrocknung des Filmes des flüssigen Wärmeträgers führt zur Entstehung einer Havariesituation, die auf eine lokalen Überhitzung der Wandung des Pressstempels (lokale Krise des Wärmeaustausches) zurückzuführen ist.

Die durchgeführten Experimente haben auch gezeigt, dass die überschüssige Zuführung des Wärmeträgers um 7% höher als die zur Durchtränkung des Netzes notwendige Menge es möglich macht, diese Erscheinung während der Pressformung zu vermeiden. Die gleichzeitige Erfüllung dieser Forderungen bringt eine Bedingung für die überschüssige Wärmeträgermenge (Δm)

$$\Delta m \ = \ (3 - 7)\%$$

mit sich.

Als zur intensiven Dampfbildung bei der Formungstemperatur fähiges Material verwendet man Metalle aus der Gruppe von Alkalimetallen, die einzeln oder in Kombination genommen sind, beispielsweise Zäsium, Rubidium, Kalium, Natrium eder eine eutektische Kalium-Natrium -Legierung. Im Temperaurintervall der Pressformung weist jedoch Natrium die besteh wärmephysikalischen Eigenschaften auf.

Nach der Evakuierung des Pressstempel-Hohlraumes und der Ausfüllung desselben mit flüssigem Metall hermetisiert man den Hohlraum des Pressstempels. Den Pressstempel spannt man in der Spannvorrichtung einer Presse ein und senkt ihn nach dar Zuführung einer Teilmenge der Glasmasse in die Matrize ab, wobei die Glasmasse verformt wird, was ihr die erforderliche Gestalt verleiht. Im Augenblick des Kontaktes des Pressstempels mit der Glasmasse setzt ein intensiver Wärmeaustausch zwischen der Formgebungsfläche und der geschmolzenen Glasmasse ein. Wärmafluss, der von der Glasmasse zu dem unteren, am stärksten wärmebelasteten Teil des Pressstempels gelangt, wird durch Verdampfung des Filmes des flüssigen metallischen Wärmeträgers entnommen und durch einen Strom von gesättigten Dämpfen in den oberen, am wenigsten durchgewärmten Teil des Pressstempels übertragen, wo die gesättigten Dämpfe des Wärmeträgers teilweise Kondensieren, indem sie die latente Verdampfungswärme an den Kondensator und die Innenwände des oberen Teils des Pressstempels abgeben. Dazu trägt auch die hohe Wärmeleitfähigkeit des flüssigen metallischen Filmes bei, vermittels dessen die Wärme von dem stärker erwärmten unteren Teil des Pressstempels zu seinem oberen Teil übertragen wird.

An den Stellen der intensiven Verdampfung des flüssigen Natriums, wo ein erhöhter Verbrauch des Wärmeträgers stattfindet, wird sein Verbrauch mit dem neu ankommenden flüssigen Natrium durch den Kapillardruck des Wärmeträgers in der kapillarporösen Striktur aufgefüllt.

Auf diese Weise geht während der Pressformung eine kontinuierliche Wärmeträgerzirkulation vonstatten, welche die Wärmsübertragung im Pressstempel von den "heissen" Abschnitten zu den "kalten" gewährleistet. Die entnommenen Wärmeflüsse werden durch den Dampf praktisch trägheitslos transportiert und übertragen die Wärme zu den relativ kalten Abschnitten durch Kondensation der gesättigten Dämpfe in Form der latenten Verdampfungswärme.

Die Regelung der Temperatur der Formgebunsfläche des Pressstempels während des Formungsprozesses erfolgt durch Druckänderung der gesättigten Dämpfe des Wärmeträgers im Hohlraum des Press-

stempels von $p_1$ bis $p_2$ dank einer Regelung des Kältemittelverbrauchs im Kondensator. Dabei ist bemerkenswert, dass im Hohlraum des Pressstempels in jedem Zeitmoment eine praktisch isotherme Temperaturverteilung stattfindet.

Tatsächlich wird unter den Bedingungen eines thermodynamischen Gleichgewichts zwischen dem Kondensat und dem gesättigten Dampf des flüssigen Metalls die Temperatur-Druck-Beziehung durch die vorstehend angegebene bekannte Abhängigkeit (3) bestimmt.

Wenn in einem solchen System aus irgendeinem Grunde ein Abschnitt der Formgebungsfläche des Pressstempels mit der Temperatur $T_1$ erscheint, die kleiner als T, die durch das Verhältnis des thermodynamischen Gleichgewichts bestimmt wird, so wird in diesem Abschnitt des Pressstempel-Hohlraumes der gesättigte Dampf zum übersättigten Dampf, und es findet seine Kondensation unter Entwicklung der latenten Verdampfungs-wärme statt. Falls sich die Temperatur irgendeines Abschnittes der Formgebungsfläche des Pressstempels erhöht, das heisst $T_1$ grösser als T ist, so geht in diesem Abschnitt des Pressstempel-Hohlraumes das Kondensat des flüssigen Metalls in den gesättigten Dampf über und entnimmt dadurch die Wärme dem genannten Abschnitt. Die Menge der dabei entnommenen Wärme wird durch die Masse des verdampften Wärmeträgers und die Grösse der latenten Verdampfungswärme bestimmt. Das Vorhandensein der zwei beschriebenen Prozesse im System gewährleistet somit eine isotherme trägheitslose Umverteilung der Wärme auf der gesamten Innenfläche des Pressstempels.

Die vorbestimmte Temperatur der Formgebungsfläche des Pressstempels wird während des Formungsprozesses durch Druckregelung der gesättigten Dämpfe des Wärmeträgers entsprechend des Bedingungen des thermodynamischen Gleichgewichts bei der Verlagerung des Gleichgewichtszustandes nach der Seite der kleineren oder grösseren Temperatur hin sichergestellt.

Dazu wird im Hohlraum des Pressstempels ein Druck der gesättigten Natriumdämpfe von $p_1$ - $p_2$ kPa erzeugt.

Die Wahl der Grenzwerte des Drucks der gesättigten Wärmeträgerdämpfe ist durch das Vorhandensein eines optimalen Temperaturbereichs der Formgebungsflächen bei der Glasformung bedingt.

Bei Temperaturen der Formgebungsflächen unterhalb der unteren Grenze treten während des Formungsprozesses Fehler solcher Art wie gehämmerte Oberflächen des Erzeugnisses, Mikrorisse, Verziehungen u.a. auf. Bekanntlich beträgt diese Temperatur 400 °C.

Die obere Temperaturgrenze ist durch die Thermodiffusion der Glasschmelze in das Metall der Formgebungsflächen und das Auftreten von Zunder bedingt. Diese Temperatur beträgt 650 °C. Also ist es notwendig, die Wärmeentnahme von den Formgebungsflächen während der Pressformung so zu regeln, dass ihre Temperatur im Bereich von 400 bis 650 °C liegt.

Unter den Bedingungen des thermodynamiscben Gleichgewichtes zwischen dem Kondensat (Wärmeträger) und dem gesättigten Dampf des flüssigen Metalls wird die Temperatur-Druck -Beziehung durch die vorstehend angegebene Gleichung (3) für den Zustand eines idealen Gases bestimmt.

Aus der Beziehung (3) ist ersichtlich, dass man durch Änderung des Drucks der gesättigten Natriumdämpfe im Hohlraum des Pressstempels die Temperatur der Formgebungsflächen regeln kann. Ausserdem folgt aus der Beziehung (3), dass zur Gewährleistung der Temperatur der Formgebungsflächen von $T_1$ = 400 °C im Hohlraum ein Druck der gesättigten Natriumdämpfe von $p_1$ = 0,08 kPa sichergestellt werden muss, während zur Gewährleistung der Temperatur der Formgebungsflächen von $T_2$ = 650 °C für Natrimdämpfe ein Druck der gesättigten Natriumdämpfe von $p_2$ = 12 kPa aufrechterhalten werden muss.

Auf der erfindungsgemässen Ausrüstung wurde eine industrielle Versuchsformung von Flugnavigations-Lichtfiltern und Küchengeschirr aus temperaturwechselbeständigen Farbgläsern und getönten Gläsern durchgeführt. Dabei wurden verschiedene Varianten der Ausfüllung der Elemente der Formausrüstung sowohl in bezug auf die Menge des zur intensiven Dampfbildung bei der Formungstemperatur fähigen Materials als auch in bezug auf den Einsatz verschiedenartiger Materialien bei unterschiedlichen technologischen Parametern des Verfahrens untersucht.

Eine Analyse der Ergebnisse einer industriellen Versuchsformung von Erzeugnissen ist in Tabelle 1 angeführt. Zum Vergleich sind in der Tabelle 1 (Beispiele 14, 15) Ergebnisse angegeben, die bei der Formung derselben Erzeugnisse auf Ganzmetallkonstruktionen der Formausrüstung erhalten wurden.

Tabelle 1

| Lfd. Nr. | Benennung des zu formenden Erzeugnisses | Benennung des zur intensiven Dampfbildung fähigen Materials | Menge des dem Hohlraum des Formelementes zugeführten Materials (Gramm) | Technologische Parameter Temperatur des zu formenden Glases, °K |
|---|---|---|---|---|
| 1 | 2 | 3 | 4 | 5 |
| 1. | Lichtfilter | Natrium | 10,0 (rechnerisch)[x] | 1793 |
| 2. | -"- | -"- | 10,3 (um 3% grösser als die rechnerische) | -"- |
| 3. | -"- | -"- | 10,7 (um 7% grösser als die rechnerische) | -"- |
| 4. | -"- | -"- | 11,0 (um 10% grosser als due rechnerische) | -"- |
| 5. | -"- | Natrium + Kalium | 10,0 (rechnerisch) | -"- |
| 6. | -"- | -"- | 10,5 (um 5% grösser als die rechnerische) | -"- |
| 7. | -"- | Kalium | 10,5 (um 5% grösser als die rechnerische) | -"- |
| 8. | -"- | Zäsium | -"- | -"- |
| 9. | Deckel für Kochtopf | Natrium | 15,0 (um 5% grösser als die rechnerische) | -"- |
| 10. | Kochtopf | Natrium | 25,0 (rechnerisch) | -"- |
| 11. | -"- | Natrium | 25,75 (um 3% grösser als die rechnerische) | -"- |
| 12. | -"- | Natrium+ Kalium | 25 (rechnerisch) | -"- |
| 13. | -"- | Natrium+ Kalium | 26,75 (um 7% grösser als die rechnerische) | -"- |
| 14. | Lichtfilter (zum Vergleich) | - | - | -"- |
| 15. | Kochtopf (zum Vergleich) | - | - | -"- |

EP 0 598 118 A1

Fortsetzung der Tabelle 1

| Technologische Parameter | | Qualitätskennwerte | |
|---|---|---|---|
| Druck gesättigter Dämpfe, kPa | Formungsgeschwindigkeit, St./min | Wanddicke des Erzeugnisses | Vorhandensein der Hämmerung |
| 6 | 7 | 8 | 9 |
| 0,06-0,08 | – | Ausrüstung wird überhitzt | |
| 7-8 | 4 | 2,5-3,0 | keine |
| 12 | 4 | 2,5-3,2 | keine |
| 14-15 | 4 | 3,0-4,0 | selten |
| 7-8 | – | Ausrüstung wird überhitzt | |
| 7-8 | 4 | 2,5-3,0 | keine |
| 7-8 | 4 | 2,5-3,0 | keine |
| 7-8 | 4 | 2,5-3,0 | keine |
| 7-8 | 4 | 2,8-3,3 | keine |
| 14-15 | – | Glas klebt an | |
| 7-8 | 4 | 3,5-4,3 | keine |
| 0,06-0,08 | – | Ausrüstung wird überhitzt | |
| 7-10 | 4 | 3,5-4,5 | keine |
| – | 2...3 | 3,5-4,5 | Hämmerung |
| – | 2...3 | 5,0-6,0 | Hämmerung |

x) – rechnerische Menge des zur intensiven Dampfbildung bei der Formungstemperatur fähigen Materials, die zur vollständigen Ausfüllung des Hohlraums des Formgebungselementes mit den gesättigten Dämpften dieses Materials und Durchtränkung der Schicht des korrisons- und hitzefesten Materials mit demselben notwendig ist

Wie aus den angeführten Beispielen erkennbar ist, ermöglicht die Anwendung der beanspruchten Erfindung es, eine hohe Qualität von Erzeugnissen unabhängig von deren Geometrie und Dicke sowie von der Formungsgeschwindigkeit zu erzielen.

Kurze Beschreibung der Zeichnungen

Das vorbeschriebene erfindungsgemässe Verfahren wird in einer Einrichtung zur Herstellung von Glaserzeugnissen realisiert, die nachstenend unter Hinweisen auf beigefügte Zeichnungen beschrieben wird, in denen es zeigt:
Fig. 1 einen erfindungsgemässen Satz der Formgebungsausrüstung;
Fig. 2 einen erfindungsgemässen Pressstempel, teilweise im Schnitt.

Beste Ausführungsform der Erfindung

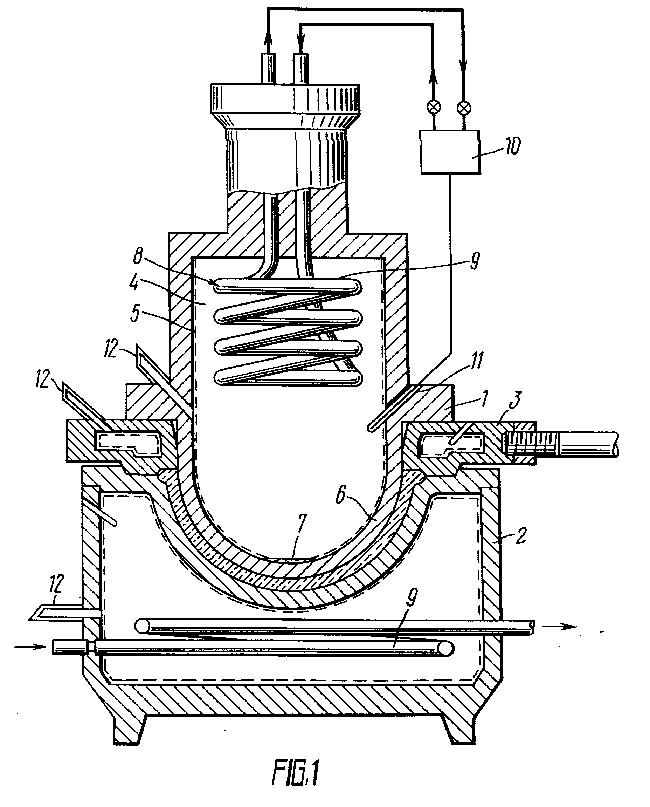

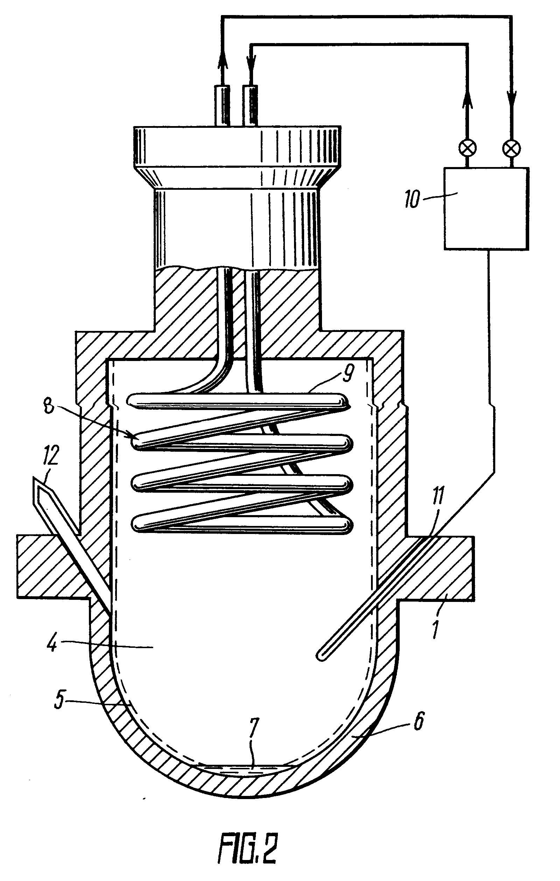

Die Einrichtung zur Herstellung von Glaserzeugnissen enthält eine Formausrüstung mit einem Pressstempel 1 (Fig. 1), einer Matrize 2 und einem Formenring 3.
Gemäss der Erfindung ist mindestens ein Formgebungselement hohl ausgebildet.
Um das Verständnis des Erfindungskerns zu erleichtern, wird hier ein Beispiel behandelt, in welchem der Pressstempel 1 (Fig. 2) hohl ausgebildet ist.

13

Der in Fig. 2 dargestellte Pressstempel 1 ist zur Formung von Lichtfiltern für Bord-Luftfahrtfeuer bestimmt und besitzt einen hermetisch dichten Hohlraum 4. Auf der Innenfläche des Pressstempels 1 ist im Hohlraum 4 eine Schicht eines korrosions- und hitzefesten Materials in Form eines Netzes 5 aus nichtrostendem Stahl angeordnet, das an der Innenfläche des Pressstempels 1 beispielsweise durch Punktschweissen starr befestigt ist. Möglich ist die Befestigung des Netzes 5 an der Innenfläche des Pressstempels 1 auch nach anderen Methoden.

Am zweckmässigsten ist die Verwendung eines feinmaschigen Netzes 5 aus nichtrostendem Stanl, das es erlaubt, an der Innenfläche des Pressstempels 1 eine kapillarporöse Struktur ("Docht) zu erzeugen, in welcher während des Formungsprozesses das flüssige Natrium zirkuliert.

In Abhängigkeit von der Konfiguration des Formgebungselementes und seinen geometrischen Abmessungen kann man an der Innenfläche desselben mehrere Schichten des Netzes 5 montieren, wodurch die Schichtdicke und demnach die Menge des zirkulierenden Natrium vergrössert wird.

Eine unerlässliche Bedingung für das Arbeitsvermögen der Einrichtung ist dabei ein starrer und satter Anschluss des Netzes 5 an die Wandung 6 an der Innenfläche des Formgebungselementes.

Eine derartige Befestigung des Netzes 5 gewährleistet die Benetzung der Innenfläche des Formgebungselementes mit dem flüssigen Natrium und schafft die günstigsten Bedingungen für die Wärmeabführung.

Das aus nichtrostendem Stahl bestehende Netz 5 entspricht am vollständigsten den Forderungen der chemischen Inertheit gegenüber den flüssigen Natrium bei hohen Temperaturen, was die Bildung von Ablagerungen auf der porösen Struktur und die Verstopfung ihrer Poren ausschliesst.

Im Hohlraum 4 des Pressstempels 1 befindet sich ein Material 7, das zur intensiven Dampfbildung bei der Formungstemperatur fähig ist. Wie bereits vorstehend angegeben, werden als solches Material Metalle aus der Gruppe von Erdalkalimetallen verwendet, die einzeln oder in Kombination genommen sind. Besonders bevorzugt ist die Verwendung von Natrium.

Die Einrichtung zur Herstellung von Glaserzeugnissen besitzt eine Vorrichtung zur thermischen Regelung des zur intensiven Dampfbildung im Formungstemperaturintervall fähigen Materials.

Als Vorrichtung zur thermischen Regelung der Natriumdämpfe im Formungstemperaturintervall wird im vorliegenden Beispiel ein Kondensator 8 eingesetzt, der in Form eines im Hohlraum 4 des Pressstempels 1 angeordneten spiralförmigen Rohres 9 ausgebildet ist. Die Enden des Rohres 9, über die ein Kältemittel zu- und abgeführt wird, sind im rückwärtigen Teil des Pressstempels 1 nach aussen herausgeführt. Als Kältemittel kann Druckluft, Wasser, Wasser-Luft-Gemisch oder gasförmiger Stickstoff verwendet werden.

Die Menge des zugeführten Kältemittels wird von einer bekannten Spezialvorrichtung 10 in Abhängigkeit von der Temperatur der Natriumdämpfe während des Formungsprozesses geregelt, die mit Hilfe eines Thermopaares 11 gemessen wird.

Möglich sind auch andere Ausführungsvariaten des Kondensators, beispielsweise in Form des Fielde-Rohres.

In der Wandung 6 des Pressstempels 1 ist ein Stutzen 12 montiert, der mit einer Vorrichtung zum Evakuieren des Pressstempel-Hohlraumes in Verbindung steht. Die Evakuierungsvorrichtung ist in der Zeichnung nicht dargestellt, da für diesen Zweck bekannte Apparate wie z.B eine Vakuumpumpe eingesetzt werden können.

Ausserdem erfüllt der Stutzen 12 auch eine andere Funktion. Über ihn wird Natrium dem Hohlraum 4 des Pressstempels 1 zugeführt.

Die Menge des Natriums soll die zur Ausfüllung des Pressstempel-Hohlraumes mit seinen Dämpfen bei der Formungstemperatur und Durchtränkung (Füllung) der Schicht des Metallnetzes 5 mit demselben notwendige Menge um 3 bis 7% übersteigen.

Alles, was hinsichtlich des Pressstempels ausgeführt wurde, bezieht sich in gleichem Masse auf die Matrize und den Pressring, falls sie hohl ausgebildet sind.

Die Einrichtung zur Herstellung von Glaserzeugnissen arbeitet folgendermassen.

An der Innenfläche des hohlen Pressstempels 1 befestigt man beispielsweise durch Punktschweissen das korrosions- und hitzefeste poröse Material in Form von zwei Schichten des feinmaschigen, aus nichtrostendem Stahl bestehenden Netzes 5.

Den Pressstempel 1 erwärmt man auf die Formunsgtemperatur nach einem beliebigen bekannten Verfahren, beispielsweise mittels eines Gasbrenners oder durch kurzzeitiges Tauchen desselben in eine Teilmenge geschmolzenen Glases.

Des weiteren nimmt man über den Stutzen 12 mit Hilfe einer Spezialvorrichtung, beispielsweise einer Vakuumpumpe, das Evakuieren des Hohlraumes 4 des Pressstempels 1 vor, worauf man über denselben Stutzen 12 dem Hohlraum des Pressstempels 1 metallisches Natrium in geschmolzenem Zustand in einer Menge zuführt, die die zur Ausfüllung seines Hohlraumes mit Natriumdämpfen und Durchtränkung der Schicht des korrisions- und hitzefesten porösen Netzes 5 um 3 bis 7% übersteigt.

Dabei verdampft ein Teil des Natriums intensiv, und es findet die Ausfüllung des Hohlraumes 4 des Presstempels 1 mit seinen Dämpfen bis zur Erzeugung des Drucks $p_o = (0,02-0,1)$Pa statt. Der zweite Natriumteil wird in flüssigem Zustand von der korrosions- und hitzefesten porösen Schicht aufgesaugt und durchtränkt diese Schicht vollständig, wodurch die Innenfläche des Presstempel-Hohlraumes benetzt wird.

Danach wird der obere Teil 12 hermetisch abgeschlossen.

Des weiteren führt man der Matrize 2 eine Teilmenge der Glasmasse zu, senkt man den Pressring 3 und den Stempel 1 ab.

Hierbei wird über die Wandung 6 des Presstempels 1, die mit der Glasmasse in Berührung steht und einen niedrigen Wärmewiderstand aufweist, die Wärme von der Glasmasse zu seiner Innenfläche übertragen, auf welcher die Schicht des mit dem flüssigen Natrium ausgefüllten Metallnetzes 5 angeordnet ist. Im Augenblick der Formung sind die Temperaturen des Glaserzeugnisses und der mit der Glasmasse in Berührung stehenden Oberfläche des Presstempels 1 ungleichmässig. In der Regel hat der mittlere Teil des Presstempels 1 eine höhere Temperatur. Dementsprechend ist auch die Temperatur an der Innenfläche seines Hohlraumes 4 und an der daran anliegenden Schicht des Metallnetzes 5 ebenfalls ungleichmässig. Das vorhandene Temperaturgefälle ruft eine Verschiebung des flüssigen Natriums aus den weniger erwärmten Abschnitten zu den stärker erwärmten Abschnitten hervor. Zusammen mit dem Natrium wird dementsprechend auch die Wärme übertragen. Dabei geht die Zirkulation des Natriums mit einer sehr hohen Geschwindigkeit vonstatten, weil sich der gesamte Prozess im Vakuum vollzieht. Hierbei ist die Zirkulationsgeschwindigkeit (die Geschwindigkeit der Wärmeübertragung) um so höher, je grösser der Temperaturgradient an der Arbeitsfläche des Presstempels 1 ist.

Gleichzeitig nimmt die Intensität der Verdampfung des Natriums zu, was eine Drucksteigerung im Presstempel-Hohlraum auf $p_2 = 12$ kPa nach sich zieht. Dabei kondensieren die Natriumdämpfe auf der Oberfläche des spiralförmigen Rohres 9 des Kondensators 8, der sich im Inneren des Hohlraumes 4 des Presstempels 1 befindet, und fallen in Form von Natriumtropfen nach unten, verdampfen dann wieder und der Zyklus wiederholt sich.

Die Druckregelung der gesättigten Natriumdämpfe wird mit Hilfe des Kondensators automatisch durchgeführt. Es ist so, dass im Falle einer Erhöhung der Temperatur der Formgebungsflächen, was bei hohen Formungsgeschwindigkeiten stattfindet, die Temperatur im Hohlraum 4 des Presstempels 1 steigt, die Intensität der Verdampfung des Natriums zunimmt und sich der Druck seiner Dämpfe erhöht. Gleichzeitig gibt das Thermopaar 11 ein Signal an eine die Kältemittelzufuhr regelnde Einrichtung ab, welche die Zuführung des Kältemittels in den Kondensator vergrössert. Dabei nimmt die Intensität der Kondensation der Natriumdämpfe zu, und ihr Druck sinkt im Hohlraum des Presstempels 1 auf den Anfangsdruck ab.

Auf diese Weise lässt sich die Temperatur der Oberfläche des Presstempels 1 auf dem erforderlichen Niveau aufrechterhalten, das eine hohe Leistung der Ausrüstung und die Qualität von zu formenden Erzeugnissen sicherstellt.

Beim Einsatz der erfindungsgemässen Einrichtung für die Formung von Lichtfiltern aus thermischem Glas wurden folgende Ergebnisse erhalten:

- die Formungsgeschwindigkeit wurde um das 1,5-bis 2 fache erhöht;
- die Masse von Erzeugnissen wurde dank einer Verringerung der Wanddicke derselben um 15 bis 30% vermindert.
- an Erzeugnissen fehlte vollkommen die Hämmerung (Welligkeit), was ihre lichttechnischen Charakteristiken und das handelsübliche Aussehen erhöht hat;
- die Ausbeute an tauglichen Erzeugnissen wurde dank einer wesentlichen Verminderung solcher Ausschussarten wie Risse und Dickenunterschiedlichkeit um das 1,5- bis 2fache erhöht.

Gewerbliche Verwertbarkeit

Das erfindungsgemässe Verfahren und die erfindungsgemässe Einrichtung können auf dem Gebiet der Glaserzeugung bei der Formung von Erzeugnissen verschiedenartiger geometrischer Abmessungen aus verschiedenen Glasarten sowie bei der Formung von Erzeugnissen aus Metall, Kunststoffen, Glasfaserplasten verwendet werden.

Am effektivsten kann die vorliegende Erfindung bei der Pressformung von Glaserzeugnissen mit erhöhten Anforderungen an die Oberflächengüte von Erzeugnissen, an ihre Gewichts- und lichttechnischen Charakteristiken angewendet werden.

EP 0 598 118 A1

**Patentansprüche**

1. Verfahren zur Herstellung von Glaserzeugnissen, das die Zuführung von Teilmengen geschmolzenen Glases und Formung derselben mittels einer Formausrüstung umfasst, die mindestens ein hohles Formgebungselement (1) enthält, in dessen Hohlraum (4) man vor der Zuführung des geschmolzenen Glases ein zur intensiven Dampfbildung bei der Formungstemperatur fähiges Material unterbrungt, das Formgebungselement (1) auf die Formungstemperatur erwärmt und dann eine thermische Regelung des genannten Materials im Formgebungstemperaturintervall vornimmt, dadurch **gekennzeichnet,** dass man die Innenfläche (4) des Formgebungselementes (1) mit einer Schicht (5) eines korrosions- und hitzefesten porösen Materials bedeckt und nach Erwärmung des Formgebungselementes (1) seinen Hohlraum (4) bis 0,02 - 0,1 Pa evakuiert, während man das zur intensiven Dampfbildung bei der Formungstemperatur fähige Material in einer Menge zuführt, die die zur Ausfüllung des Hohlraums (4) des Formgebungselementes (1) mit den gesättigten Dämpfen dieses Materials und Durchtränkung der Schicht (5) des korrosions- und hitzefesten Materials mit demselben notwenige Menge etwas übersteigt.

2. Verfahren zur Herstellung von Glaserzeugnissen nach Anspruch 1, dadurch **gekennzeichnet,** dass man das zur intensiven Dampfbildung bei der Formungstemperatur fähige Material dem Hohlraum (4) des Formgebungselementes (1) in einer Menge zuführt, die die zur Ausfüllung des Hohlraums (4) des Formgebungselementes (1) mit den gesättigten Dämpfen dieses Materials und Durchtränkung der Schicht (5) des korrosions- und hitzefesten Materials mit demselben notwendige Menge um 3 bis 7% übersteigt.

3. Verfahren zur Herstellung von Glaserzeugnissen nach Anspruch 2, dadurch **gekennzeichnet,** dass die Menge des zur intensiven Dampfbildung bei der Formungstemperatur fähigen Materials zu dessen Dichte, dem Flächeninhalt der Innenfläche des Hohlraumes (4) des Formgebungselementes (1) und der Dicke (5) des korrosions- und hitzefesten Materials direkt proportional ist.

4. Verfahren zur Herstellung von Glaserzeugnissen nach Anspruch 3, dadurch **gekennzeichnet,** dass man als Material, das zur intensiven Dampfbildung bei der Formungstemperatur fähig ist, Metalle aus der Gruppe von Alkalimetallen verwendet, die einzeln oder in Kombination genommen sind.

5. Verfahren zur Herstellung von Glaserzeugnissen nach Anspruch 4, dadurch **gekennzeichnet, dass** man als Alkalimetalle Natrium verwendet.

6. Verfahren zur Herstellung von Glaserzeugnissen nach Anspruch 5, dadurch **gekennzeichnet,** dass man im Hohlraum (4) des Formgebungselementes (1) einen Druck gesättigter Natriumdämpfe von etwa 0,08 bis etwa 12 kPa erzeugt.

7. Verfahren zur Herstellung von Glaserzeugnissen nach Anspruch 6, dadurch **gekennzeichnet,** dass man als korrosions- und hitzefestes poröses Material ein Material verwendet, das eine chemische Wechselwirkung mit Natrium ausschliesst.

8. Verfahren zur Herstellung von Glaserzeugnissen nach Anspruch 7, dadurch **gekennzeichnet,** dass man das Material, welches eine chemische Wechselwirkung mit Natrium ausschliesst, in Form eines Metallnetzes (5) ausbildet.

9. Einrichtung zur Herstellung von Glaserzeugnissen, enthaltend eine Formausrüstung, die mindestens ein Formgebunselement (1,2,3) mit einem hermetisch dichten Hohlraum einschliesst, in welchem ein zur intensiven Dampfbildung bei der Formungstemperatur fähiges Material untergebracht ist, wobei die Einrichtung eine Vorrichtung (8) zur thermischen Regelung des genannten Materials im Formgebungstempeaturintervall besitzt, dadurch **gekennzeichnet,** dass sie mit einer Vorrichtung zum Evakuieren des Hohlraumes des Formgebungselementes versehen ist und auf der Innenfläche des hohlen Formgebungselementes (1) eine Schicht (5) eines korrosions- und hitzefesten porösen Materials angeordnet ist, während in der Wandung (6) dieses Formgebungselementes (1) ein Stutzen (12) für die Zuführung des zur intensiven Dampfbildung bei der Formungstemperatur fähigen Materials angebracht ist, welcher mit der Vorrichtung zum Evakuieren des Hohlraumes des Formgebungselementes in Verbindung steht, wobei das zur intensiven Dampfbildung bei der Formungstemperatur fähige Material

16

im Hohlraum (4) des Formgebungselementes (1) in einer Menge untergebracht ist, die die zur Ausfüllung des Hohlraumes (4) des Formgebungselementes (1) mit den gesättigten Dämpfen dieses Materials und Durchtränkung der Schicht (5) des korrosions- und hitzefesten porösen Materials mit demselben notwendige Menge etwas übersteigt.

10. Einrichtung zur Herstellung von Glaserzeugnissen nach Anspruch 9, dadurch **gekennzeichnet,** dass im Hohlraum (4) des Formgebungselementes (1) als Material, das zur intensiven Dampfbildung bei der Formungstemperatur fähig ist, mindestens ein Metall aus der Gruppe von Alkalimetallen untergebracht ist.

11. Einrichtung zur Herstellung von Glaserzeugnissen nach Anspruch 10, dadurch **gekennzeichnet,** das im Hohlraum (4) des Formgebungselementes (1) als Metall aus der Gruppe von Alkalimetallen Natrium untergebracht ist.

12. Einrichtung zur Herstellung von Glaserzeugnissen nach Anspruch 11, dadurch **gekennzeichnet,** dass auf der Innenfläche des Hohlraumes (4) des Formgebungselementes (1) als Schicht (5) des korrosions- und hitzefesten Materials eine Schicht eines Materials angeordnet ist, das eine chemische Wechselwirkung mit Natrium ausschliesst.

13. Einrichtung zur Herstellung von Glaserzeugnissen nach Anspruch 12, dadurch **gekennzeichnet,** dass die Schicht (5) des Materials, das eine chemische Wechselwirkung mit Natrium ausschliesst, ein Metallnetz (5) darstellt, das an der Innenfläche im Hohlraum (4) des Formgebungselementes (1) starr befestigt ist.

FIG.1

FIG.2

| A. | CLASSIFICATION OF SUBJECT MATTER |
|---|---|

Int. Cl.5    C03B 11/00

According to International Patent Classification (IPC) or to both national classification and IPC

| B. | FIELDS SEARCHED |
|---|---|

Minimum documentation searched (classification system followed by classification symbols)

Int. Cl.5      C03B 11/00–11/16

Documentation searched other than minimum documentation to the extent that such documents are included in the fields searched

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | SU, A1, 1 321 700 (GORBAN I.A. ET AL.)<br>7 July 1987 (07.07.87) | 1,2,9,13 |
| A | SU, A, 618 345 (ANTONOV E.A. ET AL.)<br>23 June 1978 (23.06.78) | 9–12 |
| A | SU, A, 457 25 (KOROLEV S.I.),<br>31 January 1936 (31.01.36) | 9 |
| A | FR, A1, 2 415 608 (SAINT–GOBAIN INDUSTRIES)<br>24 August 1979 (24.08.79) | 1,9 |
| A | FR, A1, 2 319 587 (TOYO KOHAN CO., LTD),<br>25 February 1977 (25.02.77) | 1,9 |
| A | GB, A, 1 441 029 (EASTMAN KODAK COMPANY),<br>30 June 1976 (30..06.76) | 1,2,4–6,9,<br>10 |

–/–

| ☐ Further documents are listed in the continuation of Box C. | ☐ See patent family annex. |
|---|---|

\* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 29 September 1992    (29.09.92) | 21 October 1992    (21.10.92) |

| Name and mailing address of the ISA/<br><br>RU | Authorized officer |
|---|---|
| Facsimile No.                    , | Telephone No. |

Form PCT/ISA/210 (second sheet) (July 1992)

**INTERNATIONAL SEARCH REPORT**

C (Continuation).   DOCUMENTS CONSIDERED TO BE RELEVANT

| Category* | Citation of document, with indication, where appropriate, of the relevant passages | Relevant to claim No. |
|---|---|---|
| A | GB, A, 1 429 343 (PILKINGTON BROTHERS LIMITED), 24 March 1976 (24.03.76) | 8,13 |
| A | DE, B2, 2 726 293 (OLYMPUS OPTICAL CO. LTD.), 12 October 1978 (12.10.78) | 8,13 |